# EUROPÄISCHE PATENTSCHRIFT

(11) **EP 2 333 157 B1**
(45) Veröffentlichungstag und Bekanntmachung des Hinweises auf die Patenterteilung: **29.01.2014**
(21) Anmeldenummer: 09014845.3
(22) Anmeldetag: 30.11.2009
(51) Int. Cl.: E01C 19/48

(54) **Verfahren zur Leistungsregelung eines Straßenfertigers oder Beschickers und Straßenfertiger oder Beschicker**
Method for regulating the output of a road finisher or feeder and road finisher or feeder
Procédé de réglage de la puissance d'une finisseuse ou d'un chargeur et finisseuse ou chargeur

(43) Veröffentlichungstag der Anmeldung: 15.06.2011
(73) Patentinhaber: Joseph Vögele AG, 67067 Ludwigshafen (DE)
(72) Erfinder: Noll, Tobias, 76835 Roschbach (DE); Weiser, Ralf, 68526 Ladenburg (DE)
(74) Vertreter: Grünecker, Kinkeldey, Stockmair & Schwanhäusser

(56) Entgegenhaltungen:
- WO-A1-2010/006759
- JP-A- 2002 039 111
- US-A1- 2007 150 166

## Beschreibung

Die Erfindung betrifft ein Verfahren gemäß dem Oberbegriff des Patentanspruchs 1 sowie einen Straßenfertiger oder Beschicker gemäß Oberbegriff des Patentanspruchs 8.

Im hydrostatischen Arbeitsbetrieb von Straßenfertigern oder Beschickern wird traditionell der Verbrennungsmotor an einem festgelegten Drehzahlniveau betrieben, unabhängig davon, wie viel hydraulische oder elektrische Energie von Arbeitskomponenten abgenommen wird. Der Grund dafür ist das durch Erfahrung bestätigte Bestreben, alle Parameter konstant zu halten und für den Betrieb des Verbrennungsmotors keine Flexibilität vorzusehen, weil die bisherige Regelungstechnologie und Reaktion des Fahrzeugführers es nicht ermöglichten, sich rasch genug an sich ändernde Einbausituationen anzupassen. Dies bedingt, dass vor allem bei niedriger Belastung des Verbrennungsmotors bei festem, hohen Drehzahlniveau der Motorbetrieb hohen spezifischen Kraftstoffverbrauch bedingt und dieses hohe Drehzahlniveau in erheblicher Umweltbelastung und Geräuschbelastung resultiert. Bei solchen Lastzuständen ergeben sich auch unnötige Schleppverluste beispielsweise durch Lüfter und Hydraulikpumpen, die ebenfalls den Brennstoffverbrauch erhöhen. Es ist bereits bekannt, die Drehzahl des Verbrennungsmotors dynamisch beispielsweise durch den Fahrzeugführer zu verstellen, wenn der Straßenfertiger oder Beschicker in Transportfahrt gefahren wird. Dies erfolgt manuell und unabhängig vom Lastzustand des Verbrennungsmotors.

WO 2010/006759 A1 mit älterem Zeitrang empfiehlt, im Betrieb eines Straßenfertigers die Drehzahl des Verbrennungsmotors lastabhängig so zu verändern, dass die Drehzahl bzw. Frequenz zumindest eines Antriebes wenigstens annähernd konstant gehalten wird. Hierfür werden zwei unterschiedliche Strategien eingesetzt. Im einen Fall wird bestimmten Antrieben des Straßenfertigers zugeführte Energie dadurch konstant gehalten, in dem bei vermindertem Energiebedarf Überschussenergie zu anderen Antrieben umgeleitet wird, die keiner konstanten Drehzahl bedürfen. Umgekehrt wird bei einer Leistungszunahme zumindest eines bestimmten Antriebes, dessen Drehzahl konstant zu halten ist, Energie von anderen Antrieben abgezogen und umgeleitet, die keiner konstanten Drehzahl bedürfen. Im zweiten Fall wird dann, wenn die Energieumleitung nicht mehr ausreicht, bei einer Leistungszunahme an einem konstante Drehzahl benötigenden Antrieb dessen Energiezufuhr durch Anheben der Drehzahl des Verbrennungsmotors gesteigert. Umgekehrt wird bei fallendem Leistungsbedarf eines konstante Drehzahl benötigenden Antriebs die Drehzahl des Verbrennungsmotors verringert. In jedem Fall wird der hydraulische Volumenstrom geändert, wobei jedoch der hydraulische Druck konstant bleibt. Somit werden für die konstante Drehzahl benötigenden Antriebe die Volumenströme geändert, wobei der Regelablauf so ist, dass zunächst ein Drehzahlabfall oder ein Drehzahlanstieg innerhalb eines vorbestimmten Drehzahlfensters zugelassen und abgewartet wird, ehe mit der Regelung gegengesteuert wird.

Ferner ist aus DE 10 2008 058 174 A1 ein Drehzahlregelsystem für den Verbrennungsmotor eines Verdichtungsfahrzeuges, z.B. einer Straßenwalze, bekannt, bei dem zur Bestimmung der abgenommenen hydraulischen Leistung von durch Verstellpumpen versorgten Hydromotoren Drucksensoren eingesetzt werden. Die Drehzahlregelung erfolgt durch einen Abgleich der tatsächlich benötigten hydraulischen Leistung und der vom Dieselmotor abgegebenen Leistung. Durch den Abgleich wird unter Nutzen der Signale der Drucksensoren eine vorzeichenbehaftete Differenz zwischen der benötigten hydraulischen Leistung und der Leistungsabgabe des Verbrennungsmotors ermittelt und abhängig davon die Drehzahl des Verbrennungsmotors geregelt. Das Schluckvolumen der jeweiligen Verstellpumpe ist manuell auf einen bestimmten Wert eingestellt und kann, falls vom Fahrzeugführer als unpassend erkannt, vom Fahrzeugführer geändert werden.

Weiterer Stand der Technik ist zu finden in US 2007/150166 A und JP 2002 039111 A.

Der Erfindung liegt die Aufgabe zugrunde, ein Verfahren der eingangs genannten Art sowie einen Straßenfertiger oder Beschicker anzugeben, bei denen beim hydrostatischen Arbeitsbetrieb eines Straßenfertigers oder Beschickers unter variierenden Einbau- oder Arbeitsbedingungen entstehende Möglichkeiten zur Energieeinsparung bzw. Brennstoffeinsparung besser nutzbar sind. Das bei Straßenfertigern und Beschickern aufgrund der speziellen Anforderungen für den hydrostatischen Arbeitsbetrieb existente Einsparpotential soll möglichst effizient genutzt werden, ohne die ständige Betriebsbereitschaft zu gefährden, und soll pro Fertiger oder Beschicker mit durchschnittlicher Baugröße und Auslastung pro Jahr möglichst in Einsparungen von mehreren Tonnen Brennstoff resultieren.

Die gestellte Aufgabe wird verfahrensgemäß mit den Merkmalen des Patentanspruchs 1 und bei einem Straßenfertiger oder Beschicker mit den Merkmalen des Patentanspruchs 8 gelöst.

Die dynamische Drehzahlanpassung des Verbrennungsmotors erfolgt während des hydrostatischen Arbeitsbetriebes und bei Abnahme zumindest hydraulischer Leistung gezielt im Hinblick auf optimale Verbrauchseinsparung. Ein jeweils optimaler Betriebspunkt wird durch eine Auswertung des Lastzustandes des Verbrennungsmotors aufgesucht, wobei idealerweise der Lastzustand des Verbrennungsmotors, speziell eines Dieselmotors, dauerhaft bei ca. 95 % konstant gehalten wird. Die vorgesehenen Verstellpumpen gewährleisten einen konstanten Volumenstrom und damit eine konstante Leistungsabnahme durch den Hydromotor unabhängig von der durch den Verbrennungsmotor generierten Eingangsdrehzahl. Indem bei der Drehzahlanpassung das Schluckvolumen automatisch verstellt wird, um den konstanten Volumenstrom sicherzustellen, ist die Betriebsbereitschaft jederzeit gegeben, und kann dennoch durch Nutzen des Verstellbereiches des Schluckvolumens die Drehzahl jeweils verbrauchsoptimiert eingestellt werden. Erst bei Erreichen beispielsweise des maximalen Schluckvolumens der Verstellpumpe erfordert eine weitere Volumenstromzunahme ein Nachregeln der Drehzahl des Verbrennungsmotors. Das Schluckvolumen der Verstellpumpen wird somit im hydrostatischen Arbeitsbetrieb ständig an den jeweiligen entsprechenden Betriebspunkt des Verbrennungsmotors angepasst.

Im hydrostatischen Arbeitsbetrieb des Straßenfertigers oder Beschickers, und zwar sowohl im Einbaubetrieb als auch bei Transportfahrt, bevorzugt allerdings im Einbaubetrieb, lässt sich durch die dynamische Drehzahlanpassung des Verbrennungsmotors unter Aufrechterhaltung der erforderlichen Betriebsbereitschaft eine beträchtliche Brennstoffmenge einsparen, werden die Umweltbelastung und Geräuschbelastung, wenn immer möglich, minimiert, und ergeben sich bei niedrigen Drehzahlniveaus auch deutlich geringere Schleppverluste z.B. durch Lüfter und/oder Hydraulikpumpen.

Bei einer zweckmäßigen Verfahrensvariante wird die Anpassung der Schluckvolumina anhand einer in der Steuervorrichtung hinterlegten oder abgespeicherten Motordrehzahl/Schluckvolumen-Kennlinie vorgenommen, vorzugsweise unter Berücksichtigung vorhergehend kalibrierter Steuerstromwerte für eine elektrische Schluckvolumen-Verstellung. Die Anpassung der Schluckvolumina erfolgt hierbei im Wesentlichen ungeregelt anhand der vorab hinterlegten Kennlinie, um konstante Volumenströme sicherzustellen. Wird für den Verbrennungsmotor die Drehzahl beispielsweise auf ein niedrigeres Niveau geregelt, kann die Steuervorrichtung anhand der vorhandenen Kennlinie das Schluckvolumen der Verstellpumpe oder Verstellpumpen entsprechend anheben. Wenn diese Kennlinie unter Berücksichtigung vorhergehend kalibrierter Steuerstromwerte für eine elektrische Schluckvolumen-Verstellung vorgenommen wird, ist dies mit regelungstechnisch geringem Aufwand durchführbar, weil die ohnedies vorhandenen Steuerströme oder die Steuerstromänderungen direkt als Regelgrößen für die Drehzahlanpassung nutzbar sind. Unter dem Steuerstrom wird beispielsweise der jeweilige Stromwert verstanden, mit dem ein Proportionalmagnetventil so betätigt wird, dass es in der Verstellvorrichtung der Verstellpumpe über wenigstens einen Stellzylinder ein dem Steuerstromwert entsprechendes Schluckvolumen einstellt, beispielsweise bei einer Schrägscheiben-Kolbenpumpe den Schrägstellungswinkel der Schrägscheibe.

Bei einer alternativen Verfahrensvariante erfolgt die Anpassung der Schluckvolumina über eine Regelung mit Soll-lst-Abgleich von über Drehzahl- oder Geschwindigkeitssensoren der Hydromotoren oder deren Arbeitskomponenten für die Steuervorrichtung oder den Regelkreis generierten und vorgegebenen Werten. Da in einem Straßenfertiger oder Beschicker oftmals bereits Drehzahlsensoren vorhanden sind, z.B. im Fahrantrieb oder in der Fördervorrichtung, liegen solche für das Konstanthalten der Volumenströme nutzbare Informationen ohnedies vor. Andererseits ist die Ausstattung eines Hydromotors oder dessen Arbeitskomponente mit einem Drehzahl- oder Geschwindigkeitssensor kostengünstig realisierbar, auf jeden Fall kostengünstiger als die Ausstattung mit Drucksensoren.

Bei einer zweckmäßigen Verfahrensvariante wird innerhalb eines verbrauchsoptimalen Kennfeldbereiches des Verbrennungsmotors ein aktueller Betriebspunkt eingestellt, an welchem die benötigten Volumenströme für die Hydromotoren durch Anpassen der Schluckvolumina konstant gehalten werden. Der aktuelle Betriebspunkt kann dabei so innerhalb des verbrauchsoptimalen Kennfeldbereiches gesetzt werden, das bei Erreichen des maximalen oder minimalen Schluckvolumens zum weiteren Konstanthalten der benötigten Volumenströme ein neuer Betriebspunkt mit höherer oder niedrigerer Drehzahl noch im verbrauchsoptimalen Kennfeldbereich eingestellt werden kann. Somit wird, selbst wenn der Anpassungsbereich der Schluckvolumina nicht mehr ausreichen sollte, durch Verlegen des aktuellen Betriebspunktes vorwiegend im verbrauchsoptimalen Kennfeldbereich erheblich Brennstoff eingespart.

Weiterhin kann es zweckmäßig sein, innerhalb des jeweils möglichen Schluckvolumen-Anpassungsbereiches der Verstellpumpen Betriebspunkte des Verbrennungsmotors entlang einer optimalen Motorleistungs-Kennlinie jeweils knapp unterhalb einer Maximalleistungs-Kennlinie zu wählen. Diese optimale Motorleistungs-Kennlinie liegt beispielsweise um ca. 5 % unterhalb der Maximalleistungs-Kennlinie eines Dieselmotors.

Weiterhin kann es zweckmäßig sein, bei der Regelung bei Erreichen des jeweils maximal möglichen Schluckvolumens und der Gefahr des Unterschreitens des benötigten Volumenstroms einen neuen aktuellen Betriebspunkt mit höherer Drehzahl des Verbrennungsmotors und bei Erreichen des jeweils minimal möglichen Schluckvolumens und der Gefahr des Überschreitens des benötigten Volumenstroms einen neuen aktuellen Betriebspunkt mit niedrigerer Drehzahl des Verbrennungsmotors einzustellen, vorzugsweise entweder noch innerhalb des verbrauchsoptimalen Kennfeldbereiches, oder dann außerhalb des verbrauchsoptimalen Kennfeldbereiches, wobei außerhalb des verbrauchsoptimalen Kennfeldbereiches die Betriebspunkte nicht wie bisher nur an einem hohen festgelegten Drehzahlniveau gesetzt werden, sondern fließend und stets im Hinblick auf minimierten Brennstoffverbrauch. Die Drehzahlsprünge können vorgegeben oder situationsbedingt variabel sein.

Bei einer zweckmäßigen Verfahrensvariante werden in einem das Regelverhalten bei der dynamischen Drehzahlanpassung des Verbrennungsmotors definierenden Regelkreis der jeweils aktuelle Lastzustand oder Belastungsgrad des Verbrennungsmotors und das aktuelle Schluckvolumen der Verstellpumpen unter Berücksichtigung der benötigten Volumenströme ausgewertet. Diese Auswertung erfolgt fortlaufend, so dass die Betriebsbereitschaft des Straßenfertigers oder Beschickers zu keiner Zeit gefährdet ist und dennoch der Verbrennungsmotor jeweils verbrauchsoptimiert betrieben wird.

Bei einer zweckmäßigen Ausführungsform des Straßenfertigers oder Beschickers sind zur dynamischen Drehzahlanpassung des Verbrennungsmotors abhängig vom aktuellen Lastzustand gespeicherte oder abgelegte Betriebspunkte in Form einer die Abhängigkeit zwischen der Motordrehzahl und dem Schluckvolumen repräsentierenden Kennlinie vorgesehen. Diese Kennlinie wird von der Steuervorrichtung oder einem dieser zugeordneten Regelsystem abgearbeitet, um trotz Aufrechthalten der Betriebsbereitschaft den Verbrennungsmotor verbrauchsoptimiert zu betreiben.

Bei einer alternativen Ausführungsform des Straßenfertiges oder Beschickers weisen die Hydromotoren oder die von diesen angetriebenen Arbeitskomponenten Drehzahl- oder Geschwindigkeitssensoren auf, die signalübertragend an das Regelsystem oder die Steuervorrichtung angeschlossen sind, wobei im Regelkreis eine Abgleichssektion für einen Soll-Ist-Abgleich von Drehzahl- oder Geschwindigkeitswerten bei der zum Konstanthalten der benötigten Volumenströme durchgeführten Regelung enthalten ist. Wie in Straßenfertigern oder Beschickern üblich, sind ohnedies zumindest einige Hydromotoren schon mit Geschwindigkeits- oder Drehzahlsensoren ausgestattet, deren Signale bequem zur Drehzahlanpassung des Verbrennungsmotors nutzbar sind.

Zweckmäßig wird das Schluckvolumen jeder Verstellpumpe über wenigsten ein Proportionalmagnetventil durch Strombeaufschlagung mit einem variablen Steuerstrom eingestellt. Da der Steuerstromwert proportional zum jeweiligen Schluckvolumen ist, lässt er sich bequem gleich bei der Regelung verarbeiten, vor allem wenn die Steuerströme unterschiedlicher Verstellpumpen für die gespeicherte oder abgelegte Betriebspunkt-Kennlinie vorab kalibriert sind.

Zweckmäßig ist zwischen den Verstellpumpen und dem Verbrennungsmotor ein Pumpenverteilergetriebe vorgesehen, das entsprechende Leistungsverzweigungen zu den Verstellpumpen hat und diese mit optimalen Drehzahlen relativ zur Kurbelwellendrehzahl des Verbrennungsmotors antreibt. Neben den Verstellpumpen kann zumindest eine weitere Hydraulikpumpe, z.B. eine Konstantpumpe für weitere Verbraucher, an das Pumpenverteilergetriebe angeschlossen sein. Ferner kann der Verbrennungsmotor zusätzlich wenigstens einen z.B. leistungsgeregelten, Generator treiben, der beispielsweise zur elektrischen Versorgung von Heizungsvorrichtungen im Straßenfertiger oder Beschicker und weiterer elektrischer Ausstattungseinrichtungen dient.

Schließlich sollte der Straßenfertiger oder Beschicker mit Verstellpumpen verbundene Hydromotoren zumindest für eine der folgenden Arbeitskomponenten aufweisen: für zumindest einen Fahrantrieb, der ein Raupenfahrwerk oder ein Radfahrwert umfassen kann, zumindest eine Längs-Quer- oder Steig-Fördervorrichtung für Einbaumaterial, zumindest eine Einbaubohlen-Verdichtungs- und/oder Verstelleinrichtung.

Anhand der Zeichnungen werden Ausführungsformen des Erfindungsgegenstandes erläutert. Es zeigen:
- Fig. 1: eine schematische Seitenansicht eines Straßenfertigers,
- Fig. 2: eine schematische Seitenansicht eines Beschickers,
- Fig. 3: ein Kennfeld eines Verbrennungsmotors, insbesondere Dieselmotors als Teil eines Primärantriebsaggregats des Straßenfertigers oder Beschickers,
- Fig. 4: Leistungskennlinien des Verbrennungsmotors, insbesondere Dieselmotors,
- Fig. 5: ein Blockschaltbild eines Regelsystems zur dynamischen Drehzahlanpassung des Verbrennungsmotors im Straßenfertiger oder Beschicker, und
- Fig. 6: einen Regelkreis versinnbildlicht durch ein logisches Flussdiagramm.

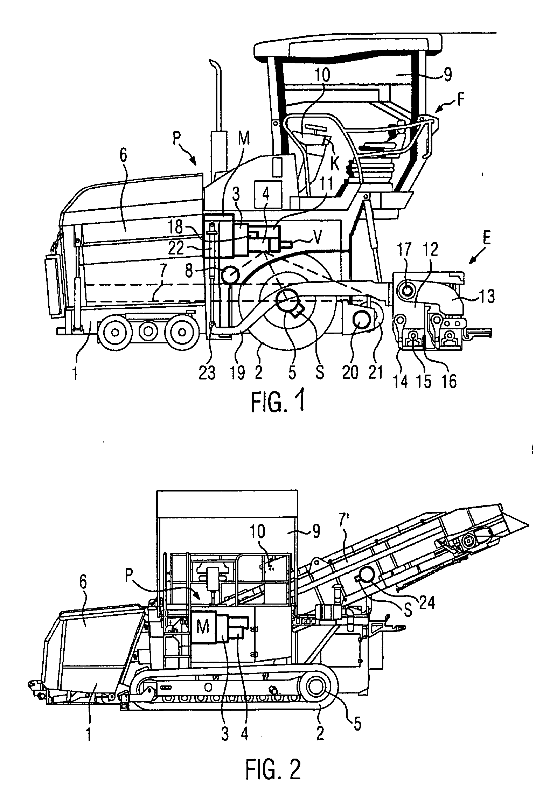

Fig. 1 zeigt einen Straßenfertiger F zum Einbauen eines Fahrbahnbelages aus bituminösem oder Beton-Einbaugut. Auf einem ein Fahrwerk 2 (Radfahrwerk oder Raupenfahrwerk) aufweisenden Chassis 1 ist frontseitig ein Materialbunker 6 und hinter diesem ein Primärantriebsaggregat P vorgesehen, das einen Verbrennungsmotor M, typischerweise einen Dieselmotor, ein Pumpenverteilergetriebe 3 und wenigstens eine am Pumpenverteilergetriebe 3 angeordnete Verstellpumpe 4 aufweist. Neben der Verstellpumpe 4 kann auch wenigstens eine weitere Hydraulikpumpe 18 vorgesehen sein. Ferner kann ein Generator 11 vom Verbrennungsmotor M angetrieben werden. In einem auf dem Chassis 1 angeordneten Führerstand 9 ist beispielsweise eine computerisierte Steuervorrichtung 10 vorgesehen, die ein Bedienpult K mit einem nicht gezeigten Fahrhauptschalter und anderen Betätigungs- und Überwachungseinrichtungen aufweist. Am Heck des Chassis 1 ist eine Querverteilvorrichtung 21, z.B. eine Schnecke, angeordnet, die durch einen Hydromotor 20 angetrieben wird. An Zugpunkten 23 am Chassis 1 sind beidseitig Zugholme 19 angelenkt, an denen eine Einbaubohle E festgelegt ist, die der Straßenfertiger F beim Einbauen schwimmend schleppt. Die Zugpunkte 23 können beispielsweise durch Hubzylinder 22 in der Höhe verstellt werden, um den Angriffswinkel der Einbaubohle E bzw. die Belagdicke zu variieren. Die Einbaubohle E weist beispielsweise eine Grundbohle 12 sowie seitlich ausschiebbare Ausziehbohlen 13 auf. Zum Verstellen der Ausziehbohlen 13 sind entsprechende Hydromotoren 17 vorgesehen. Als Verdichtungseinrichtungen der Einbaubohle E sind in der Grundbohle 12 und in den Ausziehbohlen 13 beispielsweise Tamper 14, Vibratoren 15 und gegebenenfalls Hochverdichtungseinrichtungen 16 vorgesehen, die ebenfalls von nicht gezeigten Hydromotoren antreibbar sind. Vom Materialbunker 6 verläuft im Chassis 1 eine Längsfördervorrichtung 7 zum hinteren Chassisende, um das Einbaumaterial an der Querverteilvorrichtung 21 ablegen zu können. Das Fahrwerk 2 wird von Hydromotoren 5 angetrieben, die hydraulisch mit der zumindest einen Verstellpumpe 4 verbunden sind. Ähnlich kann ein Hydromotor 8 der Längsfördervorrichtung 7 betrieben werden, oder der Hydromotor 20 der Querverteilvorrichtung 21, wie auch, nicht gezeigt, die Hydromotoren der Verdichtungsaggregate der Einbaubohle E oder die Hydromotoren 17 und/oder die Hubzylinder 22.

Jede Verstellpumpe 4 ist beispielsweise eine Schrägscheiben-Axialkolbenpumpe, deren Schluckvolumen von einem minimalen Wert V _{sHp} bis zu einem maximalen Wert V _{sHPmax} verstellbar ist, beispielsweise durch Verändern des Schrägstellungswinkels der Schrägscheibe über wenigstens einen Hydraulikzylinder, der über wenigstens ein Proportionalmagnetventil V so gesteuert wird, dass der das Proportionalmagnetventil V beaufschlagende Steuerstrom abhängig von seinem variablen Wert das Schluckvolumen bestimmt. Von den jeweiligen Hydromotoren, z.B. dem Hydromotor 5, abgenommene Hydraulikleistung bestimmt das wirkende Drehmoment, das von dem am Hydromotor wirkenden Druck abhängt. Ein konstantes Drehmoment wird mit einem konstanten Volumenstrom erzeugt, der innerhalb eines für die Verstellpumpe 4 spezifischen Anpassungsbereiches des Schluckvolumens bei gegebener Eingangsdrehzahl der Verstellpumpe 4 einstellbar ist.

Fig. 2 zeigt einen Beschicker B zur Zusammenarbeit mit einem Straßenfertiger, beispielsweise um dem Straßenfertiger unabhängig von der Einbaufahrgeschwindigkeit und Variationen der Arbeitsbreite bzw. Belagdicke einen kontinuierlichen hydrostatischen Arbeitsbetrieb zu ermöglichen, wobei der ebenfalls hydrostatische Arbeitsbetrieb arbeitende Beschicker an den Straßenfertigerbetrieb, und somit Einbauparameter, anzupassen ist. Der Beschicker B weist in seinem ein Fahrwerk 2 aufweisenden Chassis 1 einen frontseitigen Materialbunker 6 und wenigstens eine beispielsweise Steig-Längs-Fördervorrichtung 7' auf, mit der entsprechend dem Bedarf des Straßenfertigers F Einbaumaterial aus dem Materialbunker 6 nach hinten oben gefördert und in den Materialbunker 6 des Straßenfertigers F abgegeben wird. Der Beschicker B besitzt ein Primärantriebsaggregat P mit einem Verbrennungsmotor M, typischerweise einem Dieselmotor, einem Pumpenverteilergetriebe 3 und mindestens einer Verstellpumpe 4. Die Verstellpumpe 4 ist beispielsweise hydraulisch an einen Hydromotor 5 des Fahrwerks 2 angeschlossen. Die gleiche oder eine andere Verstellpumpe 4 kann an wenigstens einen Hydromotor 24 der Fördervorrichtung 7' angeschlossen sein.

Sowohl im Straßenfertiger F als auch im Beschicker B in den Fig. 1 und 2 können zumindest einbaurelevanten Hydromotoren 5 oder deren Arbeitskomponenten Drehzahl- oder Geschwindigkeitssensoren S zugeordnet sein, die signalübertragend an die Steuervorrichtung 10 angeschlossen sind.

Variierende Einbauparameter bestimmen sowohl beim Straßenfertiger F als auch beim Beschicker B die an Arbeitskomponenten benötigte Leistung. Diese variierenden Einbauparameter umfassen, ohne darauf beschränkt zu sein, beispielsweise die Einbaubreite der Einbaubohle, die Temperatur, Zusammensetzung und Konsistenz des Einbaumaterials, dem Fahrwiderstand, die Witterungsbedingungen, die Steigung oder das Gefälle des Untergrunds, die Belagdicke, der Verdichtungsgrad des Belages, die Einbaugeschwindigkeit, und dgl.. Erfindungsgemäß erfolgt eine dynamische Anpassung der Drehzahl des Verbrennungsmotors M an die variierenden Einbaubedingungen oder Einbauparameter, derart, dass der Verbrennungsmotor M, ohne die Betriebsbereitschaft des Straßenfertigers oder Beschickers zu gefährden, verbrauchsoptimiert betrieben wird. Zu diesem Zweck ist die Steuervorrichtung 10 mit einem Regelsystem ausgestattet oder verbunden, das die Drehzahlanpassung automatisch vornimmt und dabei den jeweils möglichen Anpassungsbereich des Schluckvolumens jeder Verstellpumpe 4 nutzt, um den benötigten Volumenstrom zum Hydromotor konstant zu halten.

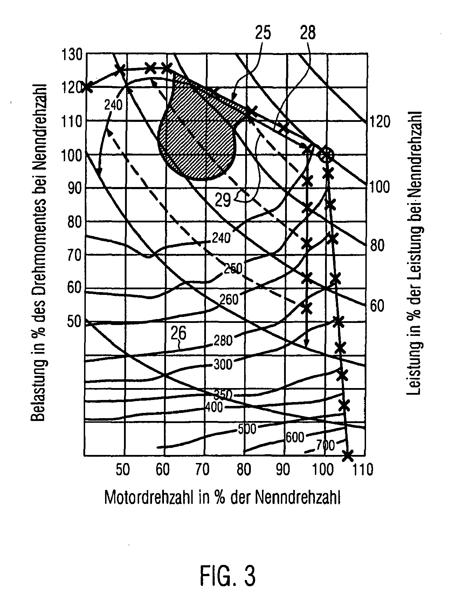

Fig. 3 zeigt ein typisches Kennfeld eines Verbrennungsmotors M, insbesondere Dieselmotors. Auf der linken vertikalen Achse ist der Lastzustand oder die Belastung des Verbrennungsmotors in Prozent des Drehmomentes bei Nenndrehzahl aufgetragen, entsprechend der auf der rechten vertikalen Achse aufgetragenen Leistung in Prozent der Leistung bei Nenndrehzahl, während die horizontale Achse die Motordrehzahl in Prozent der Nenndrehzahl wiedergibt. Innerhalb des Motorkennfeldes gibt es einen verbrauchsoptimalen Kennfeldbereich 25, der schattiert hervorgehoben ist, wobei die vorerwähnte dynamische Drehzahlanpassung des Verbrennungsmotors M so vorgenommen wird, dass, wenn immer möglich, der Verbrennungsmotor in dem verbrauchsoptimalen Kennfeldbereich 25 betrieben wird. Das Kennfeld zeigt die Zusammenhänge zwischen dem Betriebszustand (Motordrehzahl und Belastung) und dem jeweiligen spezifischen Treibstoffverbrauch. Die unregelmäßigen Linienscharen im Kennfeld (Muschelkurven) zeigen Zonen jeweils gleicher spezifischer Brennstoffverbräuche. Eine vertikale, geradlinige Kurve 27 verdeutlicht Betriebspunkte bei einer Motordrehzahl von etwa 95 % der Nenndrehzahl und zwischen etwa 45 % der Belastung und der Leistung und 100 % der Belastung. An dieser Kurve 27 wurde bisher der Verbrennungsmotor M betrieben. Die Kurve 27 repräsentiert als Beispiel das traditionelle Betreiben des Verbrennungsmotors auf fixiertem hohen Drehzahlniveau unabhängig von der abgenommenen hydraulischen Leistung. Eine Kennlinienkurve 28, die bei etwa 100 % der Belastung beginnt, bis etwa 120 % der Belastung schräg und linear ansteigt und dann progressiv bis auf etwa 95 % der Belastung und 45 % der Motordrehzahl abfällt, repräsentiert Betriebspunkte des Verbrennungsmotors mit günstigem spezifischem Treibstoffverbrauch und wird erfindungsgemäß durch die dynamische Drehzahlanpassung realisiert. Die Kennlinie 28 durchsetzt den verbrauchsoptimalen Kennfeldbereich 25. Erfindungsgemäß wird angestrebt, unter Nutzen der Anpassbarkeit des Schluckvolumens die Betriebspunkte entlang Kennlinie 28 in dem verbrauchsoptimalen Kennfeldbereich 25 zu halten, und auch außerhalb des optimalen Kennfeldbereiches 25 der Kennlinie 28 folgen zu lassen. Durch die dynamische Drehzahlanpassung des Verbrennungsmotors bei gleichzeitiger Verstellung des Schluckvolumens der Verstellpumpen wird durch Verschieben der Betriebspunkte der Kennlinie 27 entlang gestrichelter Pfeile 29 die erfindungsgemäß eingesetzte Kennlinie 28 der Betriebspunkte generiert.

Erfindungsgemäß gibt es hierfür z.B. zumindest zwei Vorgangsweisen.

Im ersten Fall wird über die Steuervorrichtung 10 mit Hilfe und unter Auswertung des Lastzustandes des Verbrennungsmotors M und einer gespeicherten oder abgelegten Kennlinie, die die Abhängigkeit zwischen der Drehzahl des Verbrennungsmotors und dem Schluckvolumen repräsentiert, der jeweils aktuelle Betriebspunkt eingestellt.

Im zweiten Fall wird der jeweilige Volumenstrom zu einem Hydromotor konstant gehalten, indem in der Steuervorrichtung 10 oder einem Regelsystem ein Abgleich zwischen Drehzahl- oder Geschwindigkeits-Ist- und Drehzahl- oder Geschwindigkeits-Sollwerten vorgenommen wird.

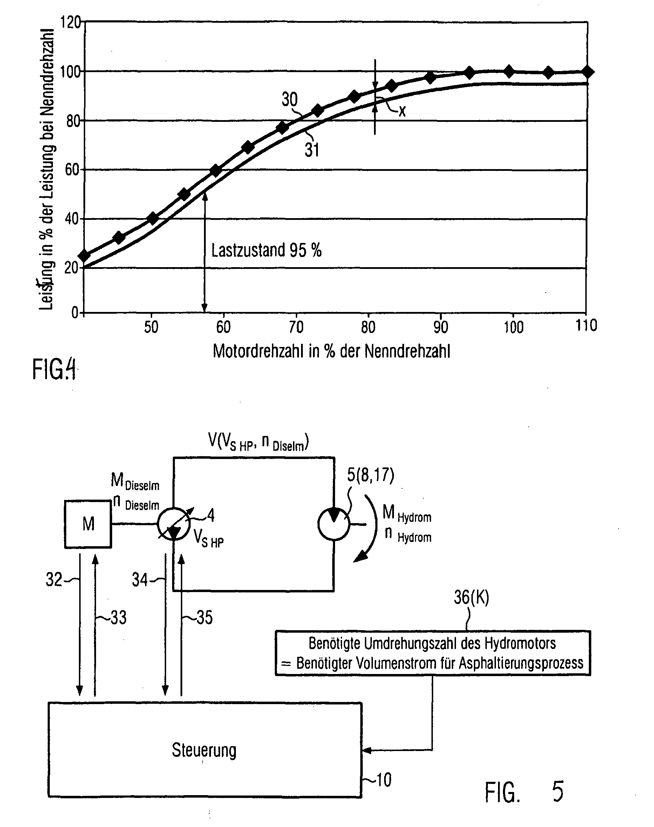

Im Hinblick auf eine optimale Brennstoffeinsparung ist für den Verbrennungsmotor eine Leistungskennlinie knapp unterhalb der Maximalleistungskennlinie anzustreben. Eine solche Leistungskennlinie entspricht im Wesentlichen der Kennlinie 28 in Fig. 3 und ist in Fig. 4 gezeigt.

Fig. 4 ist ein Diagramm der Leistungskennlinien eines Verbrennungsmotors, insbesondere Dieselmotors. Auf der vertikalen Achse ist die Leistung des Verbrennungsmotors in Prozent der Leistung bei Nenndrehzahl aufgetragen, während die horizontale Achse die Motordrehzahl in Prozent der Nenndrehzahl zeigt. Die Maximalleistungskurve 30 entspricht in etwa der in Fig. 3 gezeigten, obersten durchgezogenen Kurvenlinie. Die anzustrebende Leistungskennlinie 31 in Fig. 4 liegt etwa 5 % unterhalb der Maximalleistungskennlinie 30 und verläuft zu dieser im Wesentlichen parallel. Es handelt sich dabei um einen Lastzustand bei 95 % der von der im jeweiligen Betriebspunkt möglichen Leistungsabgabe, entsprechend z.B. der Kennlinie 28 in Fig. 3.

Fig. 5 verdeutlicht ein Beispiel eines Regelsystems des Straßenfertigers F oder Beschickers B in Form eines Blockschaltbildes. Die dynamische Anpassung der Drehzahl des Verbrennungsmotors M anhand des aktuellen Lastzustandes LZ, n _{Dieselm} ist, und dem aktuellen Schluckvolumen "V _{sHP} ist" der Verstellpumpe, wobei ein Sollwert n' _{Dieselm} für die Drehzahl und ein Sollwert V _{sHP} soll an die Verstellpumpe 4 gegeben werden, wobei mit dem Sollwert für das Schluckvolumen V _{sHp soll} der benötigte Volumenstrom V in einem günstigem Bereich des Motorkennfeldes eingestellt werden kann. Die Steuervorrichtung 10 beschafft die Information zum aktuellen Lastzustand LZ und zum aktuellen Schluckvolumen V _{sHp soll} ist, und erhält bei 36, beispielsweise aus dem Bedienpult K in den Fig. 1 und 2, die Information zur benötigten Umdrehungszahl oder dem Drehmoment des Hydromotors, gleichbedeutend mit dem benötigten Volumenstrom für einen bestimmten Teil des Einbauprozesses. Die Steuervorrichtung 10 übermittelt einen Drehzahl-Sollwert n' _{Dieselm} (entsprechend dem Pfeil 33) an den Verbrennungsmotor M, der die Verstellpumpe 4 mit der Drehzahl n _{Dieselm} antreibt, und an die Verstellpumpe 4 (Pfeil 35) den Sollwert für das Schluckvolumen V _{sHP soll.} Die Verstellpumpe 4 wird dann mit dem Schluckvolumen V _{sHp} und der Drehzahl n _{Dieselm} angetrieben, um für den Hydromotor 5 (8, 17) den benötigten Volumenstrom V bereitzustellen und konstant zu halten, der sich auch als Schluckvolumen V _{sHP} bei der Drehzahl n _{Dieselm} darstellen lässt. In anderen Worten wird in der Steuervorrichtung 10 eine Regelungsroutine oder Steuerungsroutine ausgeführt, mit dem Ziel, das Schluckvolumen V _{sHp} zu maximieren und die Motordrehzahl n _{Dieselm} zu minimieren.

Dies soll anhand folgender Fallbeispiele dokumentiert werden:
a) Das vom Hydromotor abgenommene Drehmoment M _{Hydrom} steigt bei konstanter Drehzahl n _{Hydrom} des Hydromotors. Dies bedeutet, dass der Lastzustand LZ des Verbrennungsmotors M steigt, wonach ab Erreichen eines Lastzustandes LZ von größer 95 % die Drehzahl des Verbrennungsmotors angehoben wird. Die Drehzahl des Hydromotors wird dann durch Verringern des Schluckvolumens V _{sHp} konstant gehalten.
b) Das vom Hydromotor abgenommene Drehmoment M _{Hydrom} bleibt konstant, während die Drehzahl des Hydromotors n _{Hydrom} steigt. Dies bedeutet, dass der Lastzustand für den Verbrennungsmotor steigt. Ab einem Verhältnis des Schluckvolumens V _{sHP} zum maximal möglichen Schluckvolumen V _{sHPmax} von größer 0,95 oder ab einem Lastzustand größer 95 % wird die Drehzahl des Verbrennungsmotors angehoben.
c) Das vom Hydromotor abgenommene Drehmoment M _{Hydrom} steigt bei steigender Drehzahl n _{Hydrom} des Hydromotors. Der Lastzustand für den Verbrennungsmotor steigt wie auch das Verhältnis zwischen dem gegebenen Schluckvolumen V _{sHp} und dem maximalen Schluckvolumen V _{sHPmax} Ab einem Verhältnis größer 0,95 des Verhältnisses zwischen dem momentanen Schluckvolumen V _{sHP} und dem maximal möglichen Schluckvolumen V _{sHPmax} oder ab einem Lastzustand LZ größer 95 % wird die Drehzahl des Verbrennungsmotors angehoben.
d) Das vom Hydromotor abgenommene Drehmoment M _{Hydrom} sinkt bei konstanter Drehzahl n des Hydromotors. Der Lastzustand für den Verbrennungsmotor sinkt, wobei ab einem Lastzustand LZ kleiner 95 % die Drehzahl des Verbrennungsmotors gesenkt wird. Die Drehzahl des Hydromotors wird durch Vergrößern des Schluckvolumens V _{sHp} konstant gehalten.
e) Das vom Hydromotor abgenommene Drehmoment M _{Hydrom} bleibt konstant, während die Drehzahl des Hydromotors n _{Hydrom} sinkt. Demzufolge sinkt auch der Lastzustand für den Verbrennungsmotor M. Ab einem Verhältnis kleiner 0,95 zwischen dem aktuellen Schluckvolumen V _{sHP} und dem maximal möglichen Schluckvolumen V _{sHPmax} oder ab einem Lastzustand LZ kleiner 95 % wird die Drehzahl des Verbrennungsmotors gesenkt.
f) Das vom Hydromotor abgenommene Drehmoment M sinkt, wobei auch die Drehzahl des Hydromotors n _{Hydrom} sinkt. Der Lastzustand LZ für den Verbrennungsmotor sinkt, wie auch das Verhältnis zwischen dem Schluckvolumen V _{sHP} und dem maximal möglichen Schluckvolumen _{sHp}. Ab einem Verhältnis kleiner 0,95 des Verhältnisses zwischen dem 1st-Schluckvolumen und dem maximal möglichen Schluckvolumen oder ab dem Lastzustand LZ kleiner 95 % wird die Drehzahl des Verbrennungsmotors gesenkt.

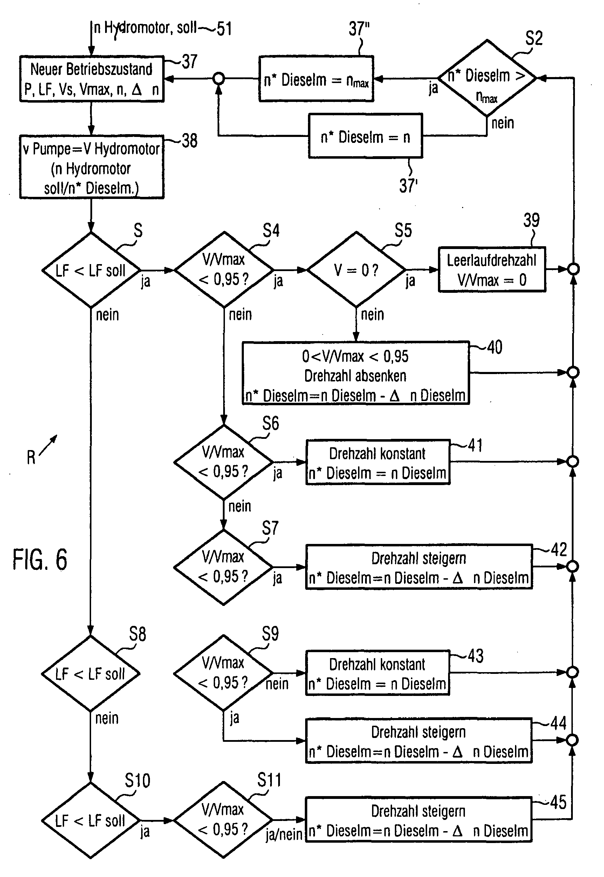

Fig. 6 verdeutlicht einen Regelkreis R als Zustands- oder Flussdiagramm, der die dynamische Anpassung der Drehzahl des Verbrennungsmotors unter Nutzen des jeweils möglichen Anpassungsbereiches des Schluckvolumens der Verstellpumpe 4 zum Aufrechthalten des benötigten Volumenstroms vornimmt. In diesem Regelkreis R werden der Lastzustand des Verbrennungsmotors LZ und das aktuelle Schluckvolumen der Verstellpumpen V _{sHP} unter Berücksichtigung der benötigten Drehzahl des Hydromotors n _{Hydrom} bzw. des benötigten Volumenstromes V ausgewertet. Der Lastzustand des Verbrennungsmotors ist durch LZ, d.h. einem Leistungsfaktor, ausgedrückt, das Schluckvolumenverhältnis V _{sHP} / V _{sHPmax} als der Quotient zwischen dem benötigten Schluckvolumen V _{sHp} und dem maximal möglichen Schluckvolumen V _{SHPmax} Als Eingangsgröße wird die Solldrehzahl n _{Hydrom soll} des Hydromotors verwendet (Schritt S1). Gemäß einer Box 37 wird ein neuer Betriebszustand beispielsweise für LZ festgestellt, unter Verarbeitung von Informationen aus den Boxen 37', 37", die bei einem Schritt S2 ermittelt werden. Im Schritt S2 wird dabei festgestellt, ob die Solldrehzahl n' _{Dieselm} des Dieselmotors höher ist als die maximale Drehzahl n ₘₐₓ. Diese Abfrage führt entweder in der Box 37' zu der Feststellung, dass die Solldrehzahl n' _{Dieselm} des Dieselmotors unterhalb der maximalen Drehzahl liegt, oder in der Box 37", dass die Solldrehzahl n' _{Dieselm} des Verbrennungsmotors der Maximaldrehzahl n ₘₐₓ entspricht. In der Box 38 wird das benötigte Schluckvolumen V _{sHP soll} der Verstellpumpe 4 zur Realisierung des benötigten Volumenstromes V errechnet durch Multiplikation des Schluckvolumens des Hydromotors V _{sHM} mit der Solldrehzahl des Hydromotors geteilt durch die Drehzahl n' _{Dieselm} des Verbrennungsmotors. Diese Informationen aus den Boxen 37, 38 werden dann in einem Schritt S3 verarbeitet, um zu ermitteln, ob der Leistungsfaktor LZ des Verbrennungsmotors kleiner ist als ein Soll-Leistungsfaktor LZ' soll, der vorab festgelegt ist, beispielsweise zwischen 85 % und 97 %, oder, entsprechend Fig. 4 mit 95 % der Maximalleistungs-Kennlinie 30. Wird im Schritt S3 festgestellt, dass der Leistungsfaktor LZ kleiner ist als der Soll-Leistungsfaktor LZ', dann wird in einem Schritt S4 ermittelt, ob das Schluckvolumenverhältnis V _{sHP} / V _{sHPmax} kleiner ist als 0,95. Ist das Ergebnis der Ermittlung im Schritt S4 positiv, dann wird im Schritt S5 festgestellt, ob der Volumenstrom Null ist. Bei positivem Ergebnis im Schritt S5 wird dann in einer Box 39 auf die Leerlaufdrehzahl geschlossen bzw. auf ein Schluckvolumenverhältnis V _{sHp} / V _{sHPmax} von Null. Diese Information wird zum Schritt S2 zurückgeführt. Ist hingegen das Ergebnis im Schritt S5 negativ, dann wird darauf geschlossen, dass das Schluckvolumenverhältnis größer ist als Null und kleiner als 0,95, mit dem Ergebnis, dass die Drehzahl des Verbrennungsmotors abzusenken ist auf die neue dann aktuelle Drehzahl n' _{Dieselm} = n _{Dieselm} - △n _{Dieselm} des Verbrennungsmotors - △n _{Dieselm} des Verbrennungsmotors. Das Inkrement der Drehzahlabsenkung △n _{Dieselm} kann vorab festgelegt werden. Diese Information wird ebenfalls zum Schritt S2 zurückgeführt. Ist das Ergebnis des Schrittes S4 negativ, d.h., das Schluckvolumenverhältnis V _{sHp} / V _{sHPmax} ist größer 0,95, dann wird in einem Schritt S6 festgestellt, ob das Schluckvolumenverhältnis V _{sHP} / V _{sHPmax} gleich 0,95 ist, oder nicht. Bei einem positiven Resultat im Schritt S6 wird die Information in der Box 41 an den Schritt S2 zurückgeführt, die darin besteht, dass die Drehzahl des Verbrennungsmotors konstant zu halten ist, d.h., die aktuelle Drehzahl n _{Dieselm} des Verbrennungsmotors gleich der Soll-Drehzahl n' _{Dieselm} des Verbrennungsmotors ist. Ist hingegen das Ergebnis im Schritt S6 negativ, d.h., das Schluckvolumenverhältnis V _{SHp} / V _{sHPmax} ist größer als 0,95, dann wird in einem Schritt S7 die Information der Box 42 ausgegeben, dass die Drehzahl des Verbrennungsmotors zu steigern ist, um eine neue Soll-Drehzahl n' _{Dieselm} des Verbrennungsmotors zu erhalten, die sich aus der momentanen Drehzahl n _{Dieselm} des Verbrennungsmotors + △n _{Dieselm} des Verbrennungsmotors ergibt, wobei das Inkrement △n _{Dieselm} des Verbrennungsmotors vorab festgesetzt sein kann. Diese Information wird ebenfalls zum Schritt S2 zurückgeführt.

Ist das Ergebnis der Feststellung im Schritt S3 negativ, d.h., LZ ist kleiner als LZ' soll, dann wird in einem Schritt S8 untersucht, ob LZ gleich LZ' soll ist, oder nicht. Bei positivem Resultat im Schritt S8 wird in einem Schritt S9 festgestellt, ob das Schluckvolumenverhältnis V _{sHP} / V _{sHPmax} größer ist als 0,95, oder nicht. Bei negativem Resultat des Schrittes S9 wird gemäß Box 43 die Information ausgegeben, dass die Drehzahl des Verbrennungsmotors konstant zu halten ist, weil die momentane Drehzahl n _{Dieselm} des Verbrennungsmotors der Soll-Drehzahl n' _{Dieselm} entspricht. Diese Information der Box 43 wird, falls aufgetreten, an den Schritt S2 übermittelt. Bei positivem Resultat des Schrittes S9 wird hingegen gemäß Box 44 die Information ausgegeben, die Drehzahl des Verbrennungsmotors zu steigern, wobei die neue Soll-Drehzahl n' _{Dieselm} des Verbrennungsmotors die Summe der momentanen Drehzahl n _{Dieselm} + △n _{Dieselm} des Dieselmotors ist, wobei das Inkrement △n _{Dieselm} vorab festgesetzt sein kann. Diese Information wird im Schritt S2 verarbeitet.

Ist das Resultat des Schrittes S8 negativ, d.h., LZ entspricht nicht LZ' soll, dann wird in einem Schritt S10 festgestellt, ob LZ größer ist als LZ' soll. Das positive Resultat des Schrittes S10 führt zum Schritt S11, in welchem ermittelt wird, ob das Schluckvolumenverhältnis V _{sHp} / V _{sHPmax} größer ist 0,95, oder nicht. Unabhängig davon, ob das Resultat dieser Feststellung positiv oder negativ ist, wird die Information in einer Box 45 zum Schritt S2 zurückgeführt, wodurch die Drehzahl des Verbrennungsmotors zu steigern ist, so dass die neue Soll-Drehzahl n' _{Dieselm} des Verbrennungsmotors gleich der Summe der momentanen Drehzahl n _{Dieselm} + △n _{Dieselm} ist, wobei das Inkrement der Drehzahländerung △n _{Dieselm} vorab festgesetzt sein kann. Auf diese Weise werden in der Regelschleife R jeweils die Informationen der Box 39 oder 40 oder 41 oder 42 oder 43 oder 44 oder 45 im Schritt S2 verarbeitet, die sich sämtliche auf die dynamische Anpassung der Drehzahl des Verbrennungsmotors M beziehen. Im Schritt S2 wird ausgewertet, ob die neue Soll-Drehzahl n' Dieser des Verbrennungsmotors höher ist als die maximale Drehzahl n ₘₐₓ, um dann bei der Feststellung des neuen Betriebszustandes zu entscheiden, ob die neue Soll-Drehzahl n' _{Dieselm} des Verbrennungsmotors gleich der Maximal-Drehzahl sein muss, oder die neue Soll-Drehzahl n' _{Dieselm} ohnedies bereits vorliegt.

Zusammengefasst wird eine dynamische Anpassung der Drehzahl des Verbrennungsmotors M in Abhängigkeit vom Lastzustand oder Belastungsfaktor (Fig. 4, Fig. 5) vorgenommen, wobei die benötigten Volumenströme im aktuellen Betriebspunkt konstant gehalten werden. Dies erfolgt entweder durch Verstellen der Verstellpumpe 4 oder der mehreren Verstellpumpen 4 mit einer in der Steuervorrichtung 10 hinterlegte Kennlinie, oder durch eine Regelung der Verstellpumpe bzw. Verstellpumpen durch Abgleich der aktuellen Drehzahl der Hydromotoren mit einem vorgegebenen Sollwert. Bei Unterschreiten des benötigten Volumenstromes wird somit die Drehzahl des Verbrennungsmotors automatisch erhöht.

Der optimale Betriebspunkt wird durch Auswerten des Lastzustandes des Verbrennungsmotors ermittelt. Die Auslastung des Verbrennungsmotors M liegt dauerhaft idealerweise bei ca. 95 % (Fig. 4). Ziel der Anpassung der Drehzahl des Verbrennungsmotors M ist ein Konstanthalten des Lastzustandes. Sämtliche einbaurelevanten Arbeitskomponenten des Straßenfertigers F oder Beschickers B (auch im Beschicker hängt die Funktion der Arbeitskomponenten von Einbauparametern des belieferten Straßenfertigers ab) umfassen Hydromotoren und Verstellpumpen zum Antreiben der Hydromotoren, wobei die Verstellpumpen durch Verstellen des Schluckvolumens einen konstanten Volumenstrom und damit eine konstante Leistungsabnahme durch den Hydromotor unabhängig von der Eingangsdrehzahl der Verstellpumpe ermöglichen. Erst bei Erreichen des maximalen Schluckvolumens der Verstellpumpe muss eine weitere Volumenstromzunahme, falls zum Konstanthalten der Leistungsabnahme erforderlich, durch Anheben der Drehzahl des Verbrennungsmotors erfolgen. Das Schluckvolumen der Verstellpumpen wird im Betrieb ständig an den aktuellen Betriebspunkt des Verbrennungsmotors angepasst. Dies kann entweder dadurch und ungeregelt erfolgen, dass zuvor die Steuerströme der Verstellpumpen kalibriert wurden, die mit dem jeweiligen Schluckvolumen korrespondieren, so dass ein konstanter Volumenstrom mit einer in der Steuervorrichtung 10 hinterlegten Kennlinie eingestellt werden kann. Wird die Drehzahl des Verbrennungsmotors beispielsweise auf ein niedriges Niveau abgesenkt, dann kann in der Steuervorrichtung 10 anhand der abgelegten Kennlinie das Schluckvolumen der Verstellpumpe entsprechend angepasst werden, um den konstanten Volumenstrom aufrechtzuerhalten.

Alternativ kann das Schluckvolumen der Verstellpumpen im Betrieb an den Betriebspunkt des Verbrennungsmotors dadurch geregelt werden, dass im Straßenfertiger F oder Beschicker B bei den einbaurelevanten Arbeitskomponenten bzw. deren Hydromotoren Drehzahl-oder Geschwindigkeitssensoren benutzt werden, die ohnedies vorhanden sind oder vorgesehen werden, und die an die Steuervorrichtung 10 laufend Drehzahl- bzw. Geschwindigkeitsinformationen liefern. Hierbei erfolgt eine Regelung mit Soll-Ist-Abgleich, um den Volumenstrom konstant zu halten, so dass die Drehzahlniveaus der angetriebenen Hydraulikmotoren konstant gehalten werden.

Falls vom Verbrennungsmotor ein Generator, meist ein Drehstromgenerator, angetrieben wird, nimmt dessen abgenommene Last keinen nennenswerten Einfluss auf die dynamische Drehzahlanpassung, da moderne Drehstromgeneratoren sehr leicht über den Erregerstrom leistungsgeregelt werden können.

Insgesamt lässt sich durch die dynamische Drehzahlanpassung unter automatischer oder kennliniengeführter Anpassung des Schluckvolumens oder der Schluckvolumina der Verstellpumpen der Verbrennungsmotor mit einem günstigen Brennstoffverbrauch betreiben, so dass insgesamt die Umweltbelastung reduziert und pro Jahr und durchschnittlicher Auslastung eines Straßenfertigers F oder Beschickers B mehrere Tonnen Brennstoff eingespart werden können. Der Bediener braucht auf die erforderliche Regelung des Schluckvolumens oder der Schluckvolumina keinen Einfluss zu nehmen, da diese entweder automatisch oder kennliniengeführt erfolgt. Der Aufwand gegebenenfalls zusätzlich vorzusehender Geschwindigkeits- oder Drehzahlsensoren für die Hydromotoren oder deren Arbeitskomponenten ist vernachlässigbar.

| Liste erläuterter Variabler | Variable | Einheit |
|---|---|---|
| | | |
| Lastzustand | LZ | % |
| Lastzustand Sollwert | LZ' | % |
| Motordrehmoment | M _{Dieselm} | Nm |
| Hydraulikmotordrehmoment | M _{Hydrom} | Nm |
| Motordrehzahl | n _{Dieselm} | 1/min |
| Motordrehzahl, Sollwert | n' _{Dieselm} | 1/min |
| Hydraulikmotordrehzahl | n _{Hydrom} | 1/min |
| Hydraulikmotordrehzahl Sollwert | n _{Hydromsoll} | 1/min |
| maximale Motordrehzahl | n ₘₐₓ | 1/min |
| Volumenstrom | V | l/min |
| Schluckvolumen Hydraulikmotor (ggf. Verstellmotor) | V _{SHM} | cm³/U |
| Schluckvolumen Verstellpumpe | V _{SHP} | cm³/U |
| Schluckvolumenverhältnis Verstellpumpe | V _{sHP} / V _{sHPmax} | - |
| maximal mögliches Schluckvolumen Verstellpumpe | V _{sHPmax} | l/min |
| Schluckvolumen Verstellpumpe Sollwert | V _{sHP soll} | cm³/U |
| Drehzahlverstellung Verbrennungsmotor | △n _{Dieselm} | 1/min |

## Patentansprüche

1. Verfahren zur Leistungsregelung zumindest im hydrostatischen Arbeitsbetrieb eines Arbeitskomponenten aufweisenden Straßenfertigers (F) oder Beschickers (B), der ein Primärantriebsaggregat (P) mit einem Verbrennungsmotor (M), vorzugsweise einem Dieselmotor, und mehreren Hydraulik-Verstellpumpen (4) aufweist, die hydraulisch mit gegebenenfalls als Verstellmotoren ausgeführten Hydraulikmotoren (5, 8, 20, 17, 24) von Arbeitskomponenten verbunden sind, wobei eine computerisierte Steuervorrichtung (10) zur Betriebssteuerung eingesetzt wird, **dadurch gekennzeichnet, dass** der Verbrennungsmotor (M) von der Steuervorrichtung (10) innerhalb seines motorspezifischen Kennfeldes in Abhängigkeit vom Lastzustand (LZ) durch dynamische Drehzahlanpassung in oder bei einem verbrauchsoptimalen Kennfeldbereich (25) betrieben wird, und dass gleichzeitig zur Konstanthaltung der Volumenströme (V) für die Hydromotoren die Schluckvolumina (V _{sHP}) der Verstellpumpen (4) automatisch angepasst werden.

2. Verfahren nach Anspruch 1, **dadurch gekennzeichnet, dass** die Anpassung der Schluckvolumina (V _{sHP}) anhand einer in der Steuervorrichtung (10) hinterlegten oder gespeicherten Motordrehzahl/Schluckvolumen-Kennlinie vorgenommen wird, vorzugsweise unter Berücksichtigung vorhergehend kalibrierter Steuerstromwerte für eine elektrische Schluckvolumen-Verstellung.

3. Verfahren nach Anspruch 1, **dadurch gekennzeichnet, dass** die Anpassung der Schluckvolumina(V _{sHP}) über eine Regelung mit Soll-Ist-Abgleich von über Drehzahl- oder Geschwindigkeits-Sensoren (S) der Hydromotoren bzw. Arbeitskomponenten für die Steuervorrichtung (10) generierten und vorgegebenen Werten vorgenommen wird.

4. Verfahren nach wenigstens einem der vorhergehenden Ansprüche, **dadurch gekennzeichnet, dass** innerhalb des verbrauchsoptimierten Kennfeldbereiches (25) ein aktueller Betriebspunkt eingestellt wird, für den die benötigten Volumenströme für die Hydromotoren durch Anpassen des Schluckvolumens(V _{sHP}) konstant gehalten werden.

5. Verfahren nach wenigstens einem der vorhergehenden Ansprüche, **dadurch gekennzeichnet, dass** innerhalb des jeweils möglichen Schluckvolumen-Anpassungsbereiches der Verstellpumpen (4) Betriebspunkte des Verbrennungsmotors (M) entlang einer optimalen Motorleistungs-Kennlinie (31) jeweils knapp unterhalb einer Maximalleistungskennlinie (30) eingeregelt werden, vorzugsweise etwa 5 % darunter.

6. Verfahren nach wenigstens einem der vorhergehenden Ansprüche, **dadurch gekennzeichnet, dass** bei der dynamischen Drehzahlanpassung durch die ausgeführte Regelung bei Erreichen des jeweils maximal möglichen Schluckvolumens und Unterschreiten des benötigten Volumenstromes ein neuer aktueller Betriebspunkt mit höherer Drehzahl des Verbrennungsmotors (M) und bei Erreichen des jeweils minimal möglichen Schluckvolumens und Überschreiten des benötigten Volumenstromes ein neuer aktueller Betriebspunkt mit niedriger Drehzahl des Verbrennungsmotors (M), vorzugsweise entweder innerhalb des verbrauchsoptimalen Kennfeldbereiches (25) oder im Kennfeld außerhalb des verbrauchsoptimierten Kennfeldbereiches (25) eingestellt werden.

7. Verfahren nach wenigstens einem der vorhergehenden Ansprüche, **dadurch gekennzeichnet, dass** in einem das Regelverhalten bei der dynamischen Drehzahlanpassung des Verbrennungsmotors definierenden Regelkreis (R) der jeweils aktuelle Lastzustand (LZ) des Verbrennungsmotors (M) und das aktuelle eingestellte Schluckvolumen (V _{sHP}) der Verstellpumpe (4) unter Berücksichtigung des benötigten Volumenstromes (V ₛₒₗₗ) ausgewertet werden.

8. Straßenfertiger (F) oder Beschicker (B), der zum hydrostatischen Arbeitsbetrieb von Arbeitskomponenten ein Primärantriebsaggregat (P) mit einem Verbrennungsmotor (M), vorzugsweise einem Dieselmotor, und mehreren Hydraulik-Verstellpumpen (4) aufweist, die hydraulisch mit gegebenenfalls als Verstellmotoren ausgebildeten Hydraulikmotoren (5, 8, 20, 17, 24) von Arbeitskomponenten (2, 7, 21, 14, 15, 16, 7') verbunden sind, sowie eine computerisierte Steuervorrichtung (10) enthält, **dadurch gekennzeichnet, dass** ein in der Steuervorrichtung (10) angeordneter oder mit dieser verbundener Regelkreis (R) zum Auswerten des Lastzustandes (LZ) des Verbrennungsmotors (M) und des aktuellen Schluckvolumens (Vs) der Verstellpumpen (4) vorgesehen ist, mit dem die Drehzahl (n) des Verbrennungsmotors (M) in Abhängigkeit vom Lastzustand (LZ) dynamisch auf einen Betriebspunkt in oder in Richtung zu einem verbrauchsoptimalen Kennfeldbereich (25) innerhalb des motorspezifischen Kennfeldes anpassbar und gleichzeitig zum Konstanthalten der Volumenströme für die Hydromotoren automatisch die Schluckvolumina (V _{sHP}) der Verstellpumpen (4) veränderbar sind.

9. Straßenfertiger oder Beschicker nach Anspruch 8, **dadurch gekennzeichnet, dass** zur dynamischen Drehzahlanpassung des Verbrennungsmotors (M) abhängig vom aktuellen Lastzustand (LZ) Betriebspunkte in Form einer die Abhängigkeit zwischen der Motordrehzahl (n _{Dieselm}) und dem Schluckvolumen (V _{sHP}) repräsentierenden Kennlinie gespeichert oder abgelegt sind.

10. Straßenfertiger oder Beschicker nach Anspruch 8, **dadurch gekennzeichnet, dass** die Hydromotoren oder von diesen angetriebene Arbeitskomponenten Drehzahl- oder Geschwindigkeitssensoren (S) aufweisen, die signalübertragend an die Steuervorrichtung (10) angeschlossen sind, und dass im Regelkreis (R) eine Abgleichsektion für einen Soll-Ist-Abgleich von Drehzahl- oder Geschwindigkeitswerten bei der zum Konstanthalten der Volumenströme durchgeführten Regelung enthalten ist.

11. Straßenfertiger oder Beschicker nach wenigstens einem der Ansprüche 8 bis 10, **dadurch gekennzeichnet, dass** das Schluckvolumen (V _{sHP}) jeder Verstellpumpe (4) über wenigsten ein Proportionalmagnetventil (V) durch Strombeaufschlagung mit einem variablen Steuerstrom einstellbar ist.

12. Straßenfertiger oder Beschicker nach den Ansprüchen 9 und 11, **dadurch gekennzeichnet, dass** zur Erstellung der gespeicherten oder abgelegten Betriebspunkt-Kennlinie die Steuerströme der Proportionalmagnetventile (V) der Verstellpumpen (4) vorab kalibriert sind.

13. Straßenfertiger oder Beschicker nach wenigstens einem der Ansprüche 8 bis 12, **dadurch gekennzeichnet, dass** zwischen den Verstellpumpen (4) und dem Verbrennungsmotor (M) ein Pumpenverteilergetriebe (3) vorgesehen ist, dass neben den Verstellpumpen (4) zumindest eine weitere Hydraulikpumpe (18) an das Pumpenverteilergetriebe (3) angeschlossen ist, und dass an den Verbrennungsmotor (M) zusätzlich wenigstens ein Generator (11) angeschlossen ist.

14. Straßenfertiger oder Beschicker nach wenigstens einem der Ansprüche 8 bis 13, **dadurch gekennzeichnet, dass** der Straßenfertiger (F) oder der Beschicker (B) mit Verstellpumpen (4) verbundene, gegebenenfalls als Verstellmotoren ausgelegte, Hydromotoren (5, 8, 20, 17, 24) zumindest für eine der folgenden Arbeitskomponenten aufweist: zumindest einen Fahrantrieb für ein Fahrwerk (2), zumindest eine Längs-, Quer- oder Steig-Fördervorrichtung (7, 7'), zumindest eine Einbaubohle-Verdichtungs- und/oder Verstelleinrichtung (14, 15, 16, 17).

## Claims

1. Method for controlling the power of a road paver (F) or a road paver feeder (B) at least in a hydrostatic working operation, the road paver (F) or the road paver feeder (B) comprising working components and a primary driving aggregate (P) with a combustion engine (M) preferably a diesel engine, and a plurality of hydraulic variable displacement pumps (4) being connected with hydraulic motors (5, 8, 20, 17, 24) of working components, the hydraulic motors optionally being variable displacement motors, wherein a computerized control device (10) is implemented for controlling the operation, **characterized in that** the combustion engine (M) is operated by the control device (10) within its motor-specific characteristic map depending from the load condition (LZ) by dynamic speed adaptation within or at a range (25) of the characteristic map, and that simultaneously the variable displacements (V_{sHP}) of the variable displacement pumps (4) are automatically adapted for keeping constant the volume flows (V) for the hydromotors (5, 8, 20, 17, 24).

2. Method according to claim 1, **characterized in that** the adaptation of the variable displacements (V_{sHP}) is effected with reference to an engine speed/displacement characteristic curve deposited or stored in the control device (10), preferably with consideration of previously calibrated control current values of electric displacement adjustments.

3. Method according to claim 1, **characterized in that** the adaptation of the variable displacements (V_{sHP}) is effected via a regulation with a target value/actual value compensation of values generated for the control device (10) by revolution sensors or speed sensors (S) of the hydromotors or the working components and of predetermined target values.

4. Method according to at least one of the preceding claims, **characterized in that** an actual operation point is set within the consumption optimized range (25) of the specific characteristic map, for which actual operation point the volume flows needed for the hydromotors are maintained constant by adapting the volumes of the variable displacements (V_{sHP}).

5. Method according to at least one of the preceding claims, **characterized in that** operation points of the combustion engine (M) are regulated within the respective possible adaptation range of the volumes of the variable displacements of the variable displacement pumps (4) along an optimal engine power characteristic line (31), respectively, slightly below a maximal power characteristic line (30), preferably about 5% below.

6. Method according to at least one of the preceding claims, **characterized in that** in the dynamic speed adaptation by the executed regulation a new actual operation point with elevated speed of the combustion engine (M) is adjusted when reaching the respective maximally possible displacement volume and when the volume flow drops below the needed volume flow, and that a new actual operation point with lower speed of the combustion engine (M) is adjusted when the volume flow exceeds the needed volume flow, preferably either within the consumption optimized range (25) or in the characteristic map outside of the consumption optimized range (25) of the characteristic map.

7. Method according to at least one of the preceding claims, **characterized in that** within a closed regulation loop (R) defining the regulating property in case of the dynamic speed adaptation of the combustion engine the respective actual load condition (LZ) of the combustion engine (N) and the actually adjusted displacement volumes (V_{sHP}) of the variable displacement pumps (4) are evaluated with consideration of the needed volume flow (Vₛₒₗₗ₎.

8. Road paver (F) or road paver feeder (B), comprising a primary driving aggregate (P) with a combustion engine (M), preferably a diesel motor, for a hydrostatic working operation of working components, as well as a plurality of hydraulic variable displacement pumps (4) being hydraulically connected with hydraulic motors (5, 8, 20, 17, 24) of working components (2, 7, 21, 14, 15, 16, 7'), the hydraulic motors optionally being variable displacement motors, as well as comprising a computerized control device (10), **characterized in that** a regulating loop (R) is provided for evaluating the load condition (LZ) of the combustion engine (M) and of the actual volumes of the displacements (Vs) of the variable displacement pumps (4), the regulating loop (R) either being arranged in the control device (10) or being connected with control device (10), by which regulating loop (R) the speed (n) of the combustion engine (M) can be adapted dynamically independent from the load condition (LZ) to an operation point within or in a direction towards a consumption optimized range (25) within a motor-specific characteristic map, and that simultaneously the volumes of the variable displacements (V_{sHP}) of the variable displacement pumps (4) can be varied automatically for maintaining constant volume flows for the hydromotors.

9. Road paver or road paver feeder according to claim 8, **characterized in that** for the dynamic speed adaptation of the combustion engine (M) depending from the actual load condition (LZ) operation points are stored or deposited in the form of a characteristic curve representing the dependency between the engine speed (n_{Dieselm}) and the volume of the variable displacement (V_{sHP}).

10. Road paver or road paver feeder according to claim 8, **characterized in that** either the hydromotors or the working components driven by the hydromotors comprise revolution sensors or speed sensors (S) being in signal transmitting connection with the control device (10), and that the regulating loop (R) contains a compensating section for a target value/actual value - compensation of revolution values or speed values and executes the compensation during the regulation for maintaining the volume flows constant.

11. Road paver or road paver feeder according to at least one of claims 8 to 10, **characterized in that** the volume of the variable displacement (V_{sHP}) of each variable displacement pump (4) is adjusted via at least one proportional solenoid valve (V) by current application with a variable control current.

12. Road paver or road paver feeder according to claims 9 and 11, **characterized in that** the electric control currents of the proportional solenoid valves (V) of the variable displacement pumps (4) are calibrated in advance for producing the stored or deposited operation point characteristic curve.

13. Road paver or road paver feeder according to at least one of claims 8 to 12, **characterized in that** a pump distribution gear mechanism (3) is arranged between the variable displacement pumps (4) and the combustion engine (M), that in addition to the variable displacement pumps (4) at least one further hydraulic pump (18) is connected to the pump distribution gear mechanism (3), and that in addition at least one generator (11) is connected to the combustion engine (M).

14. Road paver or road paver feeder according to at least one of claims 8 to 13, **characterized in that** the road paver (F) or the road paver feeder (B) comprises hydromotors (5, 8, 20, 17, 24), optionally designed as variable displacement motors, connected with variable displacement pumps (4) at least for one of the following working components: at least one travelling drive assembly for an undercarriage (2), at least one longitudinal, lateral or ascending conveying device (7, 7'), at least one compaction assembly and/or adjustment assembly (14, 15, 16, 17) of a paving screed.

## Revendications

1. Procédé de régulation de puissance au moins en fonctionnement en mode hydrostatique d'un finisseur (F) ou d'un alimentateur mobile (B), ayant des organes de fonctionnement, qui comporte un groupe d'entraînement primaire (P) avec un moteur à combustion interne (M), préférablement un moteur diesel, et plusieurs pompes hydrauliques à cylindrée variable (4) qui sont connectées hydrauliquement à des moteurs hydrauliques (5, 8, 20, 17, 24), éventuellement constitués comme des moteurs de régulation, d'organes de fonctionnement, dans lequel un dispositif de commande par ordinateur (10) est utilisé pour la commande de fonctionnement, **caractérisé en ce que** le moteur à combustion interne (M) est commandé par le dispositif de commande (10) dans le diagramme caractéristique spécifique du moteur en fonction de l'état de charge (LZ) par adaptation dynamique de la vitesse de rotation dans ou près d'une zone à consommation optimale du diagramme caractéristique (25), et **en ce que**, simultanément à la stabilisation des débits volumiques (V) fournis aux moteurs hydrauliques, les volumes de remplissage (V_{sHP}) des pompes à cylindrée variable (4) sont adaptés automatiquement.

2. Procédé selon la revendication 1, **caractérisé en ce que** l'adaptation des volumes de remplissage (V_{sHP}) est effectuée en fonction d'une courbe caractéristique vitesse de rotation du moteur/volume de remplissage, consignée ou enregistrée dans le dispositif de commande (10), préférablement en prenant en compte des valeurs de courant de commande étalonnées précédemment pour un réglage électrique du volume de remplissage.

3. Procédé selon la revendication 1, **caractérisé en ce que** l'adaptation des volumes de remplissage (V_{sHP}) est effectuée à l'aide d'une régulation avec une égalisation valeur de consigne/valeur réelle de valeurs générées et prédéterminées pour le dispositif de commande (10) via des capteurs de vitesse de rotation ou de vitesse linéaire (S) des moteurs hydrauliques ou des organes de fonctionnement.

4. Procédé selon au moins l'une des revendications précédentes, **caractérisé en ce que**, dans la zone à consommation optimisée du diagramme caractéristique (25), est réglé un point de fonctionnement actuel pour lequel les débits volumiques nécessaires pour les moteurs hydrauliques sont maintenus constants par ajustement du volume de remplissage (V_{sHP}).

5. Procédé selon au moins l'une des revendications précédentes, **caractérisé en ce que**, dans la plage d'ajustement possible correspondante du volume de remplissage des pompes à cylindrée variable (4), des points de fonctionnement du moteur à combustion interne (M) sont réglés le long d'une courbe caractéristique de puissance optimale du moteur (31) toujours juste sous une courbe caractéristique de puissance maximale (30), et préférablement environ 5 % sous celle-ci.

6. Procédé selon au moins l'une des revendications précédentes, **caractérisé en ce que**, pour l'adaptation dynamique de la vitesse de rotation par la régulation effectuée, lorsque le volume de remplissage maximal possible correspondant est atteint et que le débit volumique se trouve sous le débit volumique nécessaire, un nouveau point de fonctionnement actuel avec une vitesse de rotation plus élevée du moteur à combustion interne (M) est réglé, et lorsque le volume de remplissage minimal possible correspondant est atteint et que le débit volumique dépasse le débit volumique nécessaire, un nouveau point de fonctionnement actuel avec une vitesse de rotation plus faible du moteur à combustion interne (M) est réglé, préférablement soit à l'intérieur de la zone à consommation optimale du diagramme caractéristique (25), soit dans le diagramme caractéristique hors de la zone à consommation optimale du diagramme caractéristique (25).

7. Procédé selon au moins l'une des revendications précédentes, **caractérisé en ce que**, dans un circuit de commande (R) définissant le mode de contrôle lors de l'adaptation dynamique de la vitesse de rotation du moteur à combustion interne, l'état de charge actuel (LZ) respectif du moteur à combustion interne (M) et le volume de remplissage réglé actuel (V_{sHP}) de la pompe à cylindrée variable (4) sont évalués en prenant en compte le débit volumique nécessaire (Vₛₒₗₗ).

8. Finisseur (F) ou alimentateur mobile (B) qui, pour le fonctionnement en mode hydrostatique d'organes de fonctionnement, comporte un groupe d'entraînement primaire (P) avec un moteur à combustion interne (M), préférablement un moteur diesel, et plusieurs pompes hydrauliques à cylindrée variable (4) qui sont connectées hydrauliquement à des moteurs hydrauliques (5, 8, 20, 17, 24), éventuellement constitués comme des moteurs de régulation, d'organes de fonctionnement (2, 7, 21, 14, 15, 16, 7'), et comporte également un dispositif de commande par ordinateur (10), **caractérisé en ce qu'**est pourvu un circuit de commande agencé (R) dans le dispositif de commande (10) ou connecté à celui-ci pour l'évaluation de l'état de charge (LZ) du moteur à combustion interne (M) et du volume de remplissage actuel (Vs) des pompes à cylindrée variable (4), à l'aide duquel la vitesse de rotation (n) du moteur à combustion interne (M) peut être adaptée dynamiquement en fonction de l'état de charge (LZ) à un point de fonctionnement compris dans une zone à consommation optimale du diagramme caractéristique (25) ou vers une telle zone, dans le diagramme caractéristique spécifique du moteur, et peut, simultanément à la stabilisation des débits volumiques pour les moteurs hydrauliques, modifier automatiquement les volumes de remplissage (V_{sHP}) des pompes à cylindrée variable (4).

9. Finisseur ou alimentateur mobile selon la revendication 8, **caractérisé en ce que**, pour l'adaptation dynamique de la vitesse de rotation du moteur à combustion interne (M) en fonction de l'état de charge actuel (LZ), des points de fonctionnement sont enregistrés ou stockés sous forme d'une courbe caractéristique représentant la relation entre la vitesse de rotation du moteur (n_{Dieselm}) et le volume de remplissage (V_{sHP}).

10. Finisseur ou alimentateur mobile selon la revendication 8, **caractérisé en ce que** les moteurs hydrauliques ou des organes de fonctionnement entraînés par ceux-ci comportent des capteurs de vitesse de rotation ou de vitesse d'avancement (S) qui sont connectés au dispositif de commande (10) de manière à pouvoir transmettre un signal, et **en ce qu'**est incluse dans le circuit de commande (R) une section d'égalisation pour une égalisation valeur de consigne/valeur réelle de valeurs de vitesse de rotation ou de vitesse d'avancement lors de la régulation effectuée pour la stabilisation des débits volumiques.

11. Finisseur ou alimentateur mobile selon au moins l'une des revendications 8 à 10, **caractérisé en ce que** le volume de remplissage (V_{sHP}) de chaque pompe à cylindrée variable (4) peut être réglé à l'aide d'au moins une électrovanne proportionnelle (V) par application d'un courant de commande variable.

12. Finisseur ou alimentateur mobile selon les revendications 9 et 11, **caractérisé en ce que** les courants de commande des électrovannes proportionnelles (V) des pompes à cylindrée variable (4) sont étalonnés à l'avance pour la préparation de la courbe caractéristique de point de fonctionnement enregistrée ou stockée.

13. Finisseur ou alimentateur mobile selon au moins l'une des revendications 8 à 12, **caractérisé en ce qu'**une boîte de transfert de pompe (3) est pourvue entre les pompes à cylindrée variable (4) et le moteur à combustion interne (M), **en ce que**, outre les pompes à cylindrée variable (4), au moins une autre pompe hydraulique (18) est connectée à la boîte de transfert de pompe (3), et **en ce qu'**au moins un générateur (11) est aussi connecté au moteur à combustion interne (M).

14. Finisseur ou alimentateur mobile selon au moins l'une des revendications 8 à 13, **caractérisé en ce que** le finisseur (F) ou l'alimentateur mobile (B) comporte des moteurs hydrauliques (5, 8, 20, 17, 24), éventuellement constitués comme des moteurs de régulation, connectés à des pompes à cylindrée variable (4) pour au moins un des organes de fonctionnement suivants : au moins un entraînement d'avancement pour un châssis roulant (2), au moins un convoyeur longitudinal, transversal ou montant (7, 7'), au moins un dispositif à poutre lisseuse, compacteur et/ou de réglage (14, 15, 16, 17).
